# EUROPEAN PATENT SPECIFICATION

(11) **EP 2 487 859 B1**
(45) Date of publication and mention of the grant of the patent: **30.04.2014**
(21) Application number: 11153985.4
(22) Date of filing: 10.02.2011
(51) Int. Cl.: H04L 29/06

(54) **Method for authenticating client devices for a conference call**
Verfahren zur Authentifizierung von Client-Vorrichtungen für einen Konferenzanruf
Procédé d'authentification de dispositifs clients pour un appel en conférence

(43) Date of publication of application: 15.08.2012
(73) Proprietor: BlackBerry Limited, Waterloo, ON N2K 0A7 (CA)
(72) Inventor: George, Richard, John, Waterloo Ontario N2L 3X2 (CA); Mahmood, Amir, Irving, TX 75039 (US); Roberts, Randall, Craig, Irving, TX 75039 (US); Mikheyenok, Irina, Redwood City, CA 94065-1183 (US)
(74) Representative: MERH-IP Matias Erny Reichl Hoffmann

(56) References cited:
- WO-A1-2008/033706
- WO-A2-2010/036495

## Description

### FIELD

Example embodiments relate to conference call systems and methods, and in particular to authenticating participants of a conference call.

### BACKGROUND

During a conference call, voice-communication connections are typically made between communication devices such as telephones or mobile phones.

The participants of a conference call are sometimes loosely defined wherein original invitees can forward invitations to others who can then participate. With only rudimentary security procedures such as a conference call dial-in number and assess code almost anyone from any location can be a conference call participant. In this regard, W02010/036495A2 relates to integrating enterprise identity authorization in conferences by validating users which are to join a conference call by identifiers.

Another difficulty is that the primary details of a conference call, including the date, the invited participants and/or the subject matter may be an issue of security. Forwarding such details of a pending conference call could be considered a security violation.

Other difficulties with existing teleconferencing systems will be apparent to those skilled in the art in view of the detailed description below.

### BRIEF DESCRIPTION OF THE DRAWINGS

Reference will now be made, by way of example, to the accompanying drawings which show example embodiments, and in which:

Figure 1 shows, in block diagram form, an example system for managing enterprise-related mobile calls, including an enterprise communications platform, to which example embodiments may be applied;

Figure 2 shows, in block diagram form, further details of an embodiment of the enterprise communications platform;

Figure 3 shows another embodiment of the enterprise communications platform;

Figure 4 shows yet another embodiment of the enterprise communications platform;

Figure 5 shows further details of the enterprise communications platform of Figure 3;

Figure 6 shows, in block diagram form, a conference call system including the enterprise communications platform shown in Figure 1 and client devices;

Figure 7 shows a block diagram illustrating a mobile communication device in accordance with an example embodiment;

Figure 8 shows a user interface as displayed on a mobile communication device, for scheduling of a conference call, in accordance with an example embodiment;

Figure 9 shows a user interface for displaying a received invitation message on a mobile communication device, in accordance with an example embodiment;

Figure 10 shows an example conversation between the enterprise communications platform, an enterprise server, and a client device in accordance with an example embodiment;

Figure 11 shows another user interface for displaying a received invitation message on a mobile communication device, in accordance with another example embodiment;

Figure 12 shows another user interface for displaying a received invitation message on a mobile communication device, in accordance with another example embodiment; and

Figure 13 shows another example conversation between the enterprise communications platform, an enterprise server, and a client device in accordance with another example embodiment.

Similar reference numerals may have been used in different figures to denote similar components.

### DESCRIPTION OF EXAMPLE EMBODIMENTS

Some example embodiments generally relate to a conference call system which authenticates the device which is attempting to participate in the call.

In one aspect, there is provided a method for authenticating client devices from a conference call server, wherein the conference call server includes a memory for storing conference call scheduling information with respect to scheduled conference call sessions, wherein the conference call server is in communication with an enterprise server. The method includes receiving in the conference call server a communication from a client device with respect to a scheduled conference call session, and determining whether the client device is associated with the enterprise server, and if so authenticating the client device with respect to the scheduled conference call session.

In yet another aspect, there is provided a non-transitory computer readable medium having recorded thereon statements and instructions for execution by one or more devices for authenticating client devices for a conference call, the statements and instructions comprising code means for performing the method.

In yet another aspect, there is provided a conference call server including a memory for storing conference call scheduling information with respect to a scheduled conference call session, a communications subsystem for communicating with an enterprise server and a client device, and a controller. The controller is configured for: receiving a communication from the client device with respect to the scheduled conference call session, and determining whether the client device is associated with the enterprise server, and if so authenticating the client device with respect to the scheduled conference call session.

In another aspect, there is generally provided an interface on a device which replaces the raw information in the message or calendar body with an address link to a conference call server. Selection of the address initiates authentication of the device, for requesting receipt of at least some of the remaining conference call details, such as subject, date, recurrence, web information (e.g. join-now links), or audio information (e.g. dial-in numbers, access codes).

In another aspect, there is provided a mobile communication device including a controller; a communications subsystem for communicating with a conference call server, wherein the conference call server includes a memory for storing conference call scheduling information with respect to a conference call session, the communications subsystem being configured for receiving a message containing sender information and an address link with respect to the scheduled conference call session; a display for displaying an interface including an option to select the address link; and wherein, in response to selection of the option through the interface, the controller controls the communications subsystem to send a communication to the conference call server, the communication being for receiving from the conference call server in response at least some of any remaining conference call scheduling information including information for connecting to the scheduled conference call session.

Example embodiments relate to the control and management of conference call communications. Although reference may be made to "calls" and "task" in the description of example embodiments below, it will be appreciated that some of the described systems and methods may be applicable to session-based communications in general and not limited to voice calls. Reference to calls may for example include shared data (e.g. presentation content) as well as media sessions which may for example include video and/or audio.

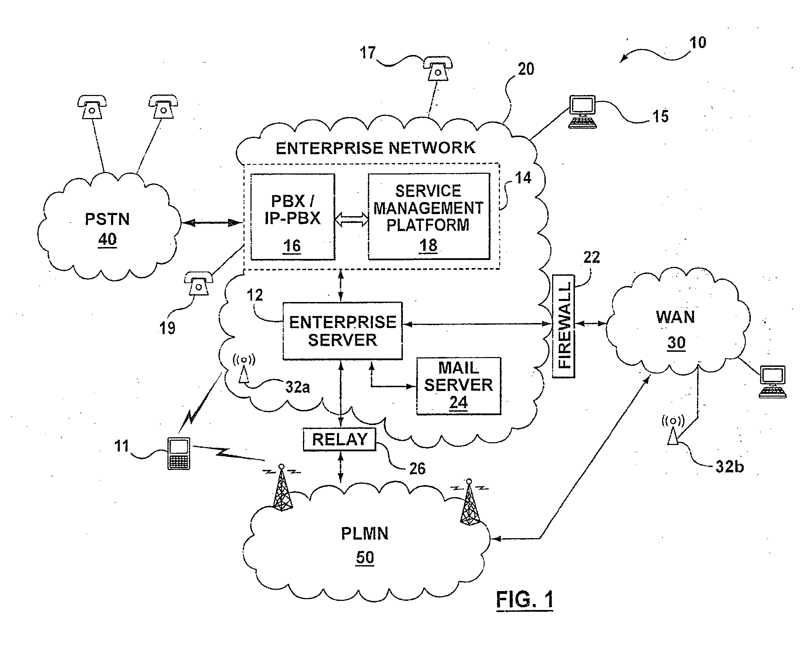

Reference is now made to Figure 1, which shows, in block diagram form, an example system, generally designated 10, for the control and management of communications. The system 10 includes an enterprise or business system 20, which in many embodiments includes a local area network (LAN). In the description below, the enterprise or business system 20 may be referred to as an enterprise network 20. It will be appreciated that the enterprise network 20 may include more than one network and may be located in multiple geographic areas in some embodiments.

The enterprise network 20 may be connected, often through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

The enterprise network 20 may also communicate with a public land mobile network (PLMN) 50, which may also be referred to as a wireless wide area network (WWAN) or, in some cases, a cellular network. The connection with the PLMN 50 may be made via a relay 26, as understood in the art.

The enterprise network 20 may also provide a wireless local area network (WLAN) 32a featuring wireless access points. Other WLANs 32 may exist outside the enterprise network 20. For example, WLAN 32b may be connected to WAN 30.

The system 10 may include a number of enterprise-associated mobile devices 11 (only one shown). The mobile devices 11 may include devices equipped with communications modules for cellular communication through the PLMN 50, mobile devices equipped for Wi-Fi communications over one of the WLANs 32, or dual-mode devices capable of both cellular and data communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or one of the WLANs 32. In various embodiments, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in known manner, as the user moves. In some instances, the dual-mode mobile devices 11 and/or the enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

The mobile devices 11 may be various types of communication devices. Such mobile devices 11 may include "Class A" devices, which are able to function continuously as dual-mode devices, capable of both media and data communications. Mobile devices 11 may also include "non-Class A" devices, which may function as dual-mode devices for initialization or prior to connection with the enterprise communications platform 14, but may lose data functionality once a media session (e.g., voice call) is established. The enterprise network 20 may also include additional client devices which are voice-only or media-only devices, which may be digital or analog for communication with the PSTN, and which may not have data capabilities (herein referred to as "voice-only" or "media-only" devices). In other embodiments, the mobile devices 11 may include any suitable client device configured with the communications functionality described herein, and may for example include computer devices, relays, proxies, gateways and any appropriate User Agents (as defined in SIP).

The enterprise network 20 typically includes a number of networked servers, computers, and other devices. For example, the enterprise network 20 may connect one or more desktop or laptop computers 15 (one shown). The connection may be wired or wireless in some embodiments. The enterprise network 20 may also connect to one or more digital telephone sets 17 (one shown).

The enterprise network 20 may include one or more mail servers, such as mail server 24, for coordinating the transmission, storage, and receipt of electronic messages for client devices operating within the enterprise network 20. Typical mail servers include the Microsoft Exchange Server™ and the IBM Lotus Domino™ server. Each user within the enterprise typically has at least one user account within the enterprise network 20. Associated with each user account is message address information, such as an e-mail address. Messages addressed to a user message address are stored on the enterprise network 20 in the mail server 24. The messages may be retrieved by the user using a messaging application, such as an e-mail client application. The messaging application may be operating on a user's computer 15 connected to the enterprise network 20 within the enterprise. In some embodiments, the user may be permitted to access stored messages using a remote computer, for example at another location via the WAN 30 using a VPN connection. Using the messaging application, the user may also compose and send messages addressed to others, within or outside the enterprise network 20. The messaging application causes the mail server 24 to send a composed message to the addressee, often via the WAN 30.

The relay 26 serves to route messages received over the PLMN 50 from the mobile device 11 to the corresponding enterprise network 20. The relay 26 also pushes messages from the enterprise network 20 to the mobile device 11 via the PLMN 50.

The enterprise network 20 also includes an enterprise server 12. Generally, the enterprise server 12 is configured to collectively serve the needs of the enterprise network 20, for example to provide and/or synchronize messaging, contacts and calendaring information between servers, desktop workstations 15, and mobile devices 11. Together with the relay 26, the enterprise server 12 functions to redirect or relay incoming e-mail messages addressed to a user's e-mail address within the enterprise network 20 to the user's mobile device 11 and to relay incoming e-mail messages composed and sent via the mobile device 11 out to the intended recipients within the WAN 30 or elsewhere. The enterprise server 12 and relay 26 together facilitate "push" e-mail service for the mobile device 11 enabling the user to send and receive e-mail messages using the mobile device 11 as though the user were connected to an e-mail client within the enterprise network 20 using the user's enterprise-related e-mail address, for example on computer 15.

As is typical in many enterprises, the enterprise network 20 includes a Private Branch exchange (although in various embodiments the PBX may be a standard PBX or an IP-PBX, for simplicity the description below uses the term PBX to refer to both) 16 having a connection with the PSTN 40 for routing incoming and outgoing voice calls for the enterprise. The PBX 16 is connected to the PSTN 40 via DID trunks or PRI trunks, for example. The PBX 16 may use ISDN signaling protocols for setting up and tearing down circuit-switched connections through the PSTN 40 and related signaling and communications. In some embodiments, the PBX 16 may be connected to one or more conventional analog telephones 19. The PBX 16 is also connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from the PBX 16 to the PSTN 40 or incoming from the PSTN 40 to the PBX 16 are typically circuit-switched calls. Within the enterprise, e.g. between the PBX 16 and terminal devices, voice calls are often packet-switched calls, for example Voice-over-IP (VoIP) calls.

The enterprise network 20 may further include a Service Management Platform (SMP) 18 for performing some aspects of messaging or session control, like call control and advanced call processing features. The SMP 18 may, in some cases, also perform some media handling. Collectively the SMP 18 and PBX 16 may be referred to as the enterprise communications platform, generally designated 14. It will be appreciated that the enterprise communications platform 14 and, in particular, the SMP 18, is implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component. As will be described below, the SMP 18 may be implemented as a multi-layer platform.

The enterprise communications platform 14 implements the switching to connect session legs and may provide the conversion between, for example, a circuit-switched call and a VoIP call, or to connect legs of other media sessions. In some embodiments, in the context of voice calls the enterprise communications platform 14 provides a number of additional functions including automated attendant, interactive voice response (IVR), call forwarding, voice mail, etc. It may also implement certain usage restrictions on enterprise users, such as blocking international calls or 1-900 calls. In many embodiments, Session Initiation Protocol (SIP) may be used to set-up, manage, and terminate media sessions for voice calls. Other protocols may also be employed by the enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the functions of the enterprise communications platform 14 is to extend the features of enterprise telephony to the mobile devices 11. For example, the enterprise communications platform 14 may allow the mobile device 11 to perform functions akin to those normally available on a standard office telephone, such as the digital telephone set 17 or analog telephone set 15. Example features may include direct extension dialing, enterprise voice mail, conferencing, call transfer, call park, etc.

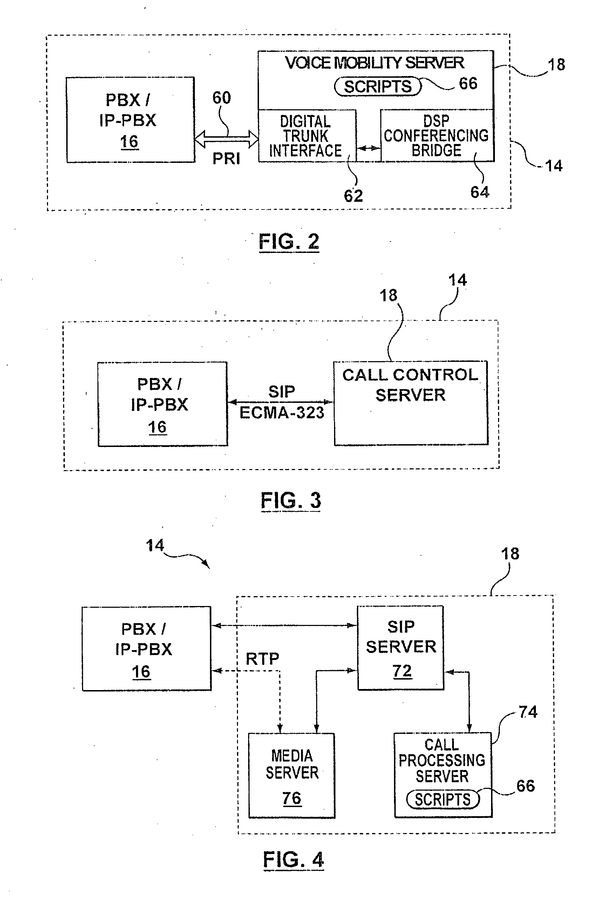

Reference is now made to Figures 2 to 4, which show example embodiments of the enterprise communications system 14. Figure 2 illustrates an embodiment intended for use in a circuit-switched TDM context. The PBX 16 is coupled to the SMP 18 via PRI connection 60 or other suitable digital trunk. In some embodiments, the PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX 16 and the SMP 18.

In this embodiment, the SMP 18 assumes control over both call processing and the media itself. This architecture may be referred to as "First Party Call Control". Many of the media handling functions normally implemented by the PBX 16 are handled by the SMP 18 in this architecture. Incoming calls addressed to any extension or direct dial number within the enterprise, for example, are always first routed to the SMP 18. Thereafter, a call leg is established from the SMP 18 to the called party within the enterprise, and the two legs are bridged. Accordingly, the SMP 18 includes a digital trunk interface 62 and a digital signal processing (DSP) conferencing bridge 64. The DSP conferencing bridge 64 performs the bridging of calls for implementation of various call features, such as conferencing, call transfer, etc. The digital trunk interface 62 may be implemented as a plurality of telephonic cards, e.g. Intel Dialogic cards, interconnected by a bus and operating under the control of a processor. The digital trunk interface 62 may also be partly implemented using a processor module such as, for example, a Host Media Processing (HMP) processor.

The SMP 18 may include various scripts 66 for managing call processing. The scripts 66 are implemented as software modules, routines, functions, etc., stored in non-volatile memory and executed by the processor of the SMP 18. The scripts 66 may implement call flow logic, business logic, user preferences, call service processes, and various feature applications.

Figure 3 shows another embodiment in which the PBX 16 performs the functions of terminating and/or bridging media streams, but call control functions are largely handled by the SMP 18. In this embodiment, the SMP 18 may be referred to as a call control server 18. This architecture may be referred to as "Third-Party Call Control".

The call control server 18 is coupled to the PBX 16, for example through the LAN, enabling packet-based communications and, more specifically, IP-based communications. In one embodiment, communications between the PBX 16 and the call control server 18 are carried out in accordance with SIP. In other words, the call control server 18 uses SIP-based communications to manage the set up, tear down, and control of media handled by the PBX 16. In one example embodiment, the call control server 18 may employ a communications protocol conforming to the ECMA-269 or ECMA-323 standards for Computer Supported Telecommunications Applications (CSTA).

Figure 4 shows yet another embodiment of the enterprise communications system 14. This embodiment reflects the adaptation of an existing set of call processing scripts to an architecture that relies on third-party call control, with separate call control and media handling. The SMP 18 includes a call processing server 74. The call processing server 74 includes the scripts or other programming constructs for performing call handling functions. The SMP 18 also includes a SIP server 72 and a media server 76. The separate SIP server 72 and media server 76 logically separate the call control from media handling. The SIP server 72 interacts with the call processing server 74 using a computer-implemented communications handling protocol, such as one of the ECMA-269 or ECMA-323 standards. These standards prescribe XML based messaging for implementing Computer Supported Telecommunications Applications (CSTA).

The SIP server 72 interacts with the media server 76 using SIP-based media handling commands. For example, the SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP).

Other architectures or configurations for the enterprise communications system 14 will be appreciated by those ordinarily skilled in the art.

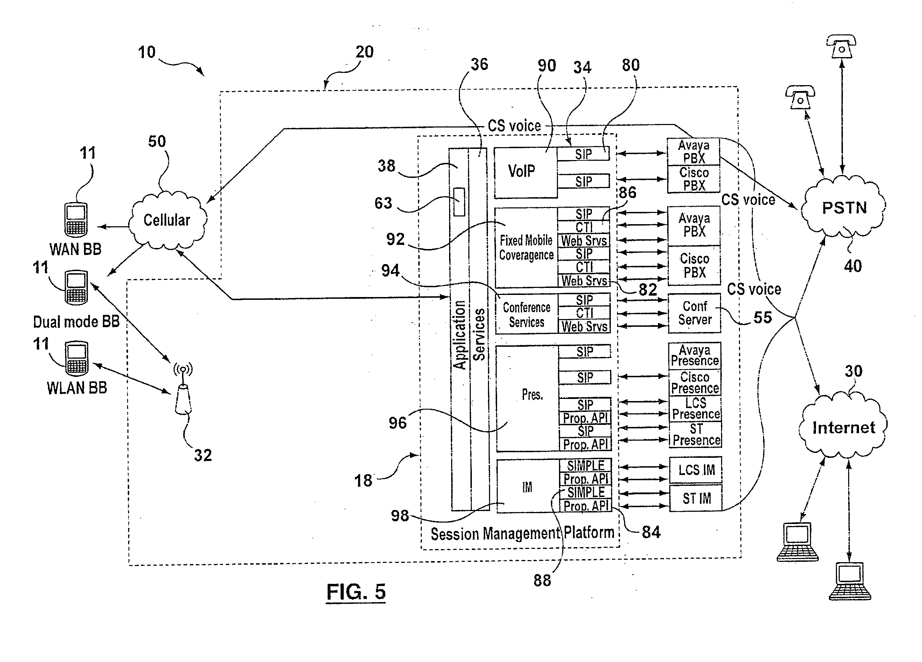

Reference is now made to Figure 5, which shows another embodiment of the enterprise communications system 14 with a Third Party Call Control architecture. In this embodiment, the SMP 18 is a multi-layer platform that includes a protocol layer 34, a services layer 36 and an application layer 38. The protocol layer 34 includes a plurality of interface protocols configured for enabling operation of corresponding applications in the application layer 38. The services layer 36 includes a plurality of services that can be leveraged by the interface protocols to create richer applications. Finally, the application layer 38 includes a plurality of applications that are exposed out to the communication devices and that leverage corresponding ones of the services and interface protocols for enabling the applications.

Specifically, the protocol layer 34 preferably includes protocols which allow media to be controlled separate from data. For example, the protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in the enterprise network 20, which will be further described below.

Although SIP 80 may be utilized, it is appreciated that the system 10 can operate using the above disclosed or additional protocols. As known by those of ordinary skill in the art, SIP is the IETF (Internet Engineering Task Force) standard for multimedia session management, and more specifically is an application-layer control protocol for establishing, maintaining, modifying and terminating multimedia sessions between two or more endpoints. As further known by those of ordinary skill in the art, the SIP protocol 80 includes two interfaces for signaling: SIP-Trunk (hereinafter referred to as "SIP-T") and SIP-Line (hereinafter referred to as "SIP-L"). Specifically, the SIP-T interface is utilized when the endpoint is a non-specific entity or not registered (i.e., when communicating between two network entities). In contrast, the SIP-L interface is utilized when the endpoint is registered (i.e., when dialing to a specific extension). SIP is defined in J. Rosenberg et al., "RFC 3261 - Session Initiation Protocol" (June 2002), the contents of which are herein incorporated by reference.

The SMP 18 also includes a plurality of enablers, among other things, a VoIP enabler 90, a Fixed Mobile Convergence or FMC enabler 92, a conference services enabler 94, a presence enabler 96 and an Instant Messaging or IM enabler 98. Each of the enablers 90-98 are used by corresponding services in the services layer 36 that combine one or more of the enablers. Each of the applications in the application layer 38 is then combined with one or more of the services to perform the desired application. For example, a phone call service may use the VoIP or PBX enabler, and an emergency response application may use the phone call service, an Instant Messenger service, a video call service, and email service and/or a conference service.

The application layer 38 may include a conference services application 63 that, together with the conference services enabler 94, enables multiple communication devices (including desk telephones and personal computers) to participate in a conference call through use of a centralized conference server 55. As seen in Figure 5, the conference server 55 is provided in the enterprise network 20 and is in communication with the conference services enabler 94 preferably through the SIP protocol 80, although it is recognized that additional protocols that control media separate from data may be appropriate, such as the Web Services protocol 82 or the CTI protocol 86. As will be described in further detail below, the conference call server 55 is configured for directing media and data streams to and from one or more communication devices (i.e., mobile devices 11, telephones 17, and computers 15).

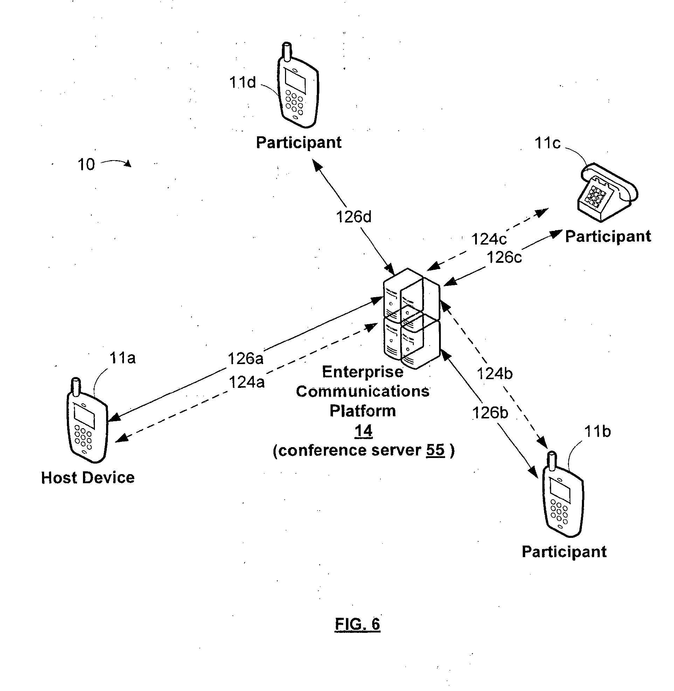

Example conference call systems and methods in accordance with example embodiments will now be described, referring now to Figure 6, which shows the system 10 when used or configured as a conference call system. As shown, the enterprise communications platform 14 includes the conference server 55 for providing conference call services for a number of client devices such as mobile devices 11, illustrated as one designated host device 11a and one or more participant devices 11b, 11c, 11d. The mobile devices 11 may collectively form a conference call group. The host device 11a is generally the mobile device 11 or associated user who schedules and hosts a conference call session, and may for example be permitted to perform such hosting functions as roll call, mute all, broadcast only, conference lock, etc.

The enterprise communications platform 14 and the associated conference server 55 may be used for generally executing conference call functions. As described above, in example embodiments, the enterprise communications platform 14 may include or be coupled to the media server 76 (Figure 4), wherein the enterprise communications platform 14 controls the media handling and media sessions of the media server 76.

Referring still to Figure 6, in order to implement some of the conference call functions described herein, the enterprise communications platform 14 may communicate with the mobile devices 11 by way of media sessions and/or control sessions. Specifically, as shown in Figure 6, the mobile devices 11 communicates via media sessions 126 (shown as solid lines) and control sessions 124 (shown as dashed lines to distinguish from the media sessions 126). For example, the designated host device 11a communicates via media session 126a and control session 124a. Participant device 11b communicates via media session 126b and control session 124b. Participant device 11c communicates via media session 126c and control session 124c. In some embodiments, as shown, the participant device 11d may merely communicate via media session 126d over the PLMN 50 (Figure 1) or PSTN 40 (Figure 1) only (without an associated control session).

In some example embodiments, the media sessions may be facilitated by the enterprise communications platform 14 by way of Real-time Transport Protocol (RTP) media sessions, and may include voice calls, video calls, circuit-switched calls or VoIP calls. In order to generate or establish a conference call session, the enterprise communications platform 14 connects or links at least some of the call legs of each media session 126. The particular methods and processes for connecting of media sessions 126 into a conference call session would be understood by those skilled in the art, which may for example be implemented by media shuffling or SDP (Session Description Protocol) media shuffling, etc.

In some example embodiments, a data connection (e.g. the same data connection as used by the control sessions 124) can be further used to provide additional data sharing between mobile devices 11. For example, during a conference call, the host mobile device 11a may provide or transfer a data file to the remaining mobile devices 11. Data sharing may also include Web Services or sharing of presentation content.

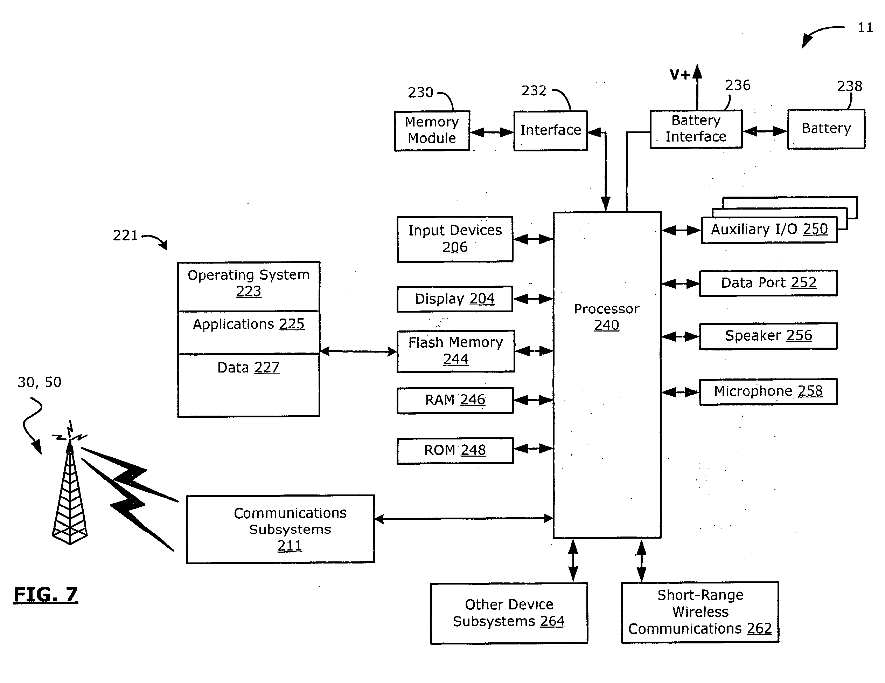

Reference is now made to Figure 7 which illustrates in detail a mobile device 11 in which example embodiments can be applied. The mobile device 11 is a two-way communication device having data and voice communication capabilities, and the capability to communicate with other computer systems, for example, via the Internet. Depending on the functionality provided by the mobile device 11, in various embodiments the mobile device 11 may be a handheld device, a multiple-mode communication device configured for both data and voice communication, a smartphone, a mobile telephone or a PDA (personal digital assistant) enabled for wireless communication.

The mobile device 11 includes a rigid case (not shown) housing the components of the mobile device 11. The internal components of the mobile device 11 may, for example, be constructed on a printed circuit board (PCB). The description of the mobile device 11 herein mentions a number of specific components and subsystems. Although these components and subsystems may be realized as discrete elements, the functions of the components and subsystems may also be realized by integrating, combining, or packaging one or more elements in any suitable fashion. The mobile device 11 includes a controller comprising at least one processor 240 (such as a microprocessor) which controls the overall operation of the mobile device 11. The processor 240 interacts with device subsystems such as a wireless communication subsystem 211 for exchanging radio frequency signals with the wireless network (e.g. WAN 30 and/or PLMN 50) to perform communication functions. The processor 240 interacts with additional device subsystems including a display 204 such as a liquid crystal display (LCD) screen or any other appropriate display, input devices 206 such as a keyboard and control buttons, persistent memory 244, random access memory (RAM) 246, read only memory (ROM) 248, auxiliary input/output (I/O) subsystems 250, data port 252 such as a conventional serial data port or a Universal Serial Bus (USB) data port, speaker 256, microphone 258, short-range communication subsystem 262 (which may employ any appropriate a wireless (e.g., RF), optical, or other short range communications technology), and other device subsystems generally designated as 264. Some of the subsystems shown in Figure 2 perform communication-related functions, whereas other subsystems may provide "resident" or on-device functions.

Display 204 may be realized as a touch-screen display in some embodiments. The touch-screen display may be constructed using a touch-sensitive input surface connected to an electronic controller and which overlays the visible element of display 204. The touch-sensitive overlay and the electronic controller provide a touch-sensitive input device and the processor 240 interacts with the touch-sensitive overlay via the electronic controller.

The wireless communication subsystem 211 includes one or more communication systems for communicating with wireless WAN base stations 30 and wireless LAN access points 32 within the wireless network. The particular design of the wireless communication subsystem 211 depends on the wireless network in which mobile device 11 is intended to operate. The mobile device 11 may send and receive communication signals over the wireless network after the required network registration or activation procedures have been completed.

The processor 240 operates under stored program control and executes software modules 221 stored in memory such as persistent memory 244 or ROM 248. The processor 240 can execute code means or instructions. ROM 248 may contain data, program instructions or both. Persistent memory 244 may contain data, program instructions or both, in some embodiments is rewritable under control of processor 240, and may be realized using any appropriate persistent memory technology, including EEPROM, EAROM, FLASH, and the like. As illustrated in Figure 2, the software modules 221 comprise operating system software 223 and software applications 225.

Software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

The software applications 225 may further include a range of applications, including, for example, an e-mail messaging application, address book, calendar application, notepad application, Internet browser application, voice communication (i.e., telephony) application, mapping application, or a media player application, or any combination thereof. Each of the software applications 225 may include layout information defining the placement of particular fields and graphic elements (e.g., text fields, input fields, icons, etc.) in the user interface (i.e., the display 204) according to the application.

In some embodiments, the auxiliary input/output (I/O) subsystems 250 may comprise an external communication link or interface, for example, an Ethernet connection. The auxiliary I/O subsystems 250 may further comprise one or more input devices, including a pointing or navigational tool such as a clickable trackball or scroll wheel or thumbwheel, or one or more output devices, including a mechanical transducer such as a vibrator for providing vibratory notifications in response to various events on the mobile device 11 (e.g., receipt of an electronic message or incoming phone call), or for other purposes such as haptic feedback (touch feedback).

In some embodiments, the mobile device 11 also includes one or more removable memory modules 230 (typically comprising FLASH memory) and one ore more memory module interfaces 232. Among possible functions of the removable memory module 230 is to store information used to identify or authenticate a user or the user's account to wireless network (e.g. WAN 30 and/or PLMN 50). For example, in conjunction with certain types of wireless networks, including GSM and successor networks, the removable memory module 230 is referred to as a Subscriber Identity Module or SIM. The memory module 230 is inserted in or connected to the memory module interface 232 of the mobile device 11 in order to operate in conjunction with the wireless network.

The mobile device 11 stores data 227 in a persistent memory 244. In various embodiments, the data 227 includes service data comprising information required by the mobile device 11 to establish and maintain communication with the wireless network (e.g. WAN 30 and/or PLMN 50). The data 227 can also include, for example, scheduling and connection information for connecting to a scheduled call.

The mobile device 11 also includes a battery 238 which furnishes energy for operating the mobile device 11. The battery may be coupled to the electrical circuitry of mobile device 11 through a battery interface 236, which may manage such functions as charging the battery from an external power source (not shown) and the distribution of energy to various loads within or connected to the mobile device 11. Short-range communication subsystem 262 is an additional optional component which provides for communication between the mobile device 11 and different systems or devices, which need not necessarily be similar devices. For example, the short-range communication subsystem 262 may include an infrared device and associated circuits and components, or a wireless bus protocol compliant communication mechanism such as a BLUETOOTH communication module to provide for communication with similarly-enabled systems and devices.

A predetermined set of applications that control basic device operations, including data and possibly voice communication applications will normally be installed on the mobile device 11 during or after manufacture. Additional applications and/or upgrades to the operating system software 223 or software applications 225 may also be loaded onto the mobile device 11 through the wireless network (e.g. WAN 30 and/or PLMN 50), the auxiliary I/O subsystem 250, the data port 252, the short-range communication subsystem 262, or other suitable subsystem such as 264. The downloaded programs or code modules may be permanently installed, for example, written into the program memory (e.g., the persistent memory 244), or written into and executed from the RAM 246 for execution by the processor 240 at runtime.

The mobile device 11 may provide two principal modes of communication: a data communication mode and an optional voice communication mode. In the data communication mode, a received data signal such as a text message, an e-mail message, Web page download, or an image file will be processed by the wireless communication subsystem 211 and input to the processor 240 for further processing. For example, a downloaded Web page may be further processed by a browser application or an e-mail message may be processed by an e-mail message messaging application and output to the display 204. A user of the mobile device 11 may also compose data items, such as e-mail messages, for example, using the input devices in conjunction with the display 204. These composed items may be transmitted through the wireless communication subsystem 211 over the wireless network (e.g. WAN 30 and/or PLMN 50). In the voice communication mode, the mobile device 11 provides telephony functions and operates as a typical cellular phone.

In some existing conventional conferencing system, the use of PIN numbers or passcodes is solely used to determine authentication of participants. This can have limited effectiveness for securing a conference call. In some other conventional systems, a host-designated "whitelist" of participants may also be provided to further restrict who enters the conference call by giving each participant a different passcode.

In some example embodiments, there is generally provided a system which can provide an additional layer of protection by authenticating the device (rather than the participant individual) at the enterprise level. Specifically, it is recognized herein that conference calls could be secured by determining whether the client devices are associated with an enterprise.

Referring briefly to Figure 1, the enterprise server 12 may contain a registry of client devices 11 and the associated phone numbers, e-mail address, persistent device identifiers (such as PIN (Personal Identification Number) or IMEI (International Mobile Equipment Identity)) and/or related user information such as user name and corporate title. Registration of a client device 11 is typically performed by an administrator of the enterprise server 12, for example when a new employee joins a company or when a new device is purchased. Generally, client devices 11 which are identified in the registry are considered secure and traceable and can therefore be authenticated with respect to a conference call.

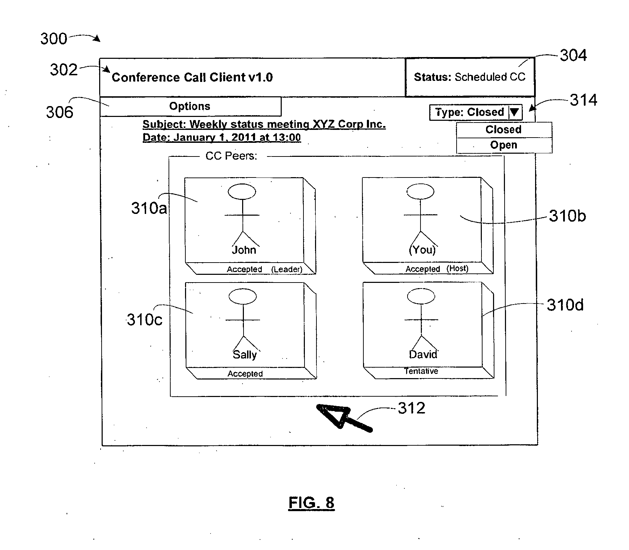

Reference is now made to Figure 8, which shows a user interface 300 displayed on the display 204 for providing conference call functions, in accordance with an example embodiment. In the example embodiment shown, the user interface 300 is for example implemented by a conference call application (as a stand-alone or in combination with other applications) resident on the mobile device 11 for specifically communicating with the enterprise communications platform 14. The user interface 300 may form part of a conference call session scheduling process.

Still referring to Figure 8, the user interface 300 relates to scheduling of a conference call session having a subject and which is to occur at a scheduled time and date. For example, the time and date of the schedule conference call session may be stored within the conference call application or a calendar application. For example, the scheduled conference call has a subject field of "Weekly status meeting XYZ Corp Inc." and has a scheduled date field of "January 1, 2011 at 13:00". The user interface 300 may be manually triggered by launching and subsequently operating the conference call application.

As shown in Figure 8, the user interface 300 also includes an options menu 306 to perform functions such as editing the existing scheduled conference call, scheduling new conference calls, and inviting new participants. Conference call scheduling information is sent from the device 11 to the enterprise communications platform 14, which stores the information in a memory and sends an invitation message to the specified participants with the conference call scheduling information.

At the time of the scheduled conference call, the enterprise communications platform 14 may contact each of the devices 11 to join the media sessions together. In example embodiments, the devices 11 may also dial or link into the enterprise communications platform 14 using dialing or address link information received during scheduling. In some traditional systems, any participant merely having the access code (for dial-in) or passwords (for address link) would be able to access the conference call, which could pose a security threat to the enterprise communications platform 14. Example embodiments herein provide additional authentication by identifying the actual client device 11, as an additional layer of security.

As shown in Figure 8, the user interface 300 includes a title bar 302, a status icon 304, an options menu 306, and participant icons (each or individually 310) which represent the status of each participant for the conference call. The participant icons 310 can, for example, be a photo or avatar of the individual. A cursor 312 is also shown for indicating which item(s) on the user interface 300 are to be selected (e.g., controllable by a user input device such as a touchscreen, touch scrollball or mouse). The status icon 304 displays the present status of the conference call, for example "Scheduled CC" (Conference Call) as shown.

Referring now to the participant icons 310, in the example shown, the user interface 300 is displayed on the host device 11a, indicated as "You - Host" as shown in icon 310b. Another participant icon 310a can be designated as the leader device 11, typically for the participant individual who will be doing the majority of the speaking, for example "John - Leader" as shown. The remaining participant icons 310c, 310d represent additional participant devices 11 ("Sally" and "David", respectively, as shown). Contact information such as e-mail address or phone number for the participants can be pre-stored in association with the participant names (or can be manually entered, as appropriate). The status of each participant icon 310 can also be shown, for example, as Accepted, Tentative, or Declined.

As shown in Figure 8, in some example embodiments the host device 11a can also select a menu 314 to designate the scheduled conference call as a "closed" conference call. In a "closed" call, only the specified or eligible participant devices 11 designated by the host device 11a may join the call. In some example embodiments, in a "closed" call further authentication of those participant devices 11 is performed when attempting to access the scheduled conference call, as described in greater detail herein. As shown, the host device 11a also has the option to use the menu 314 to set the scheduled conference call as an "open" conference call, wherein any participant device 11 (designated as eligible or not) may join.

Generally, in some example embodiments, as part of the conference call session scheduling process, after the conference call scheduling information is configured by the host device 11a, the enterprise communications platform 14 subsequently communicates with each device 11 for inviting to the scheduled conference call and for provisioning at least some of the conference call scheduling information. Each device 11 has an option to Accept, Decline, or Tentative. If the device 11 selects Accept, this means that the device 11 will participate in the scheduled conference call. If the device 11 selects Decline, for example, the host device 11a is notified by the enterprise communications platform 14 that the scheduled conference call has been declined by the particular device 11. The notification may be made by phone call, data message, email, etc. If the host device 11a Declines, then the entire scheduled conference call may be cancelled and the other devices 11 notified accordingly. If the device 11 selects Tentative, then the enterprise communications platform 14 notifies the host device 11a accordingly.

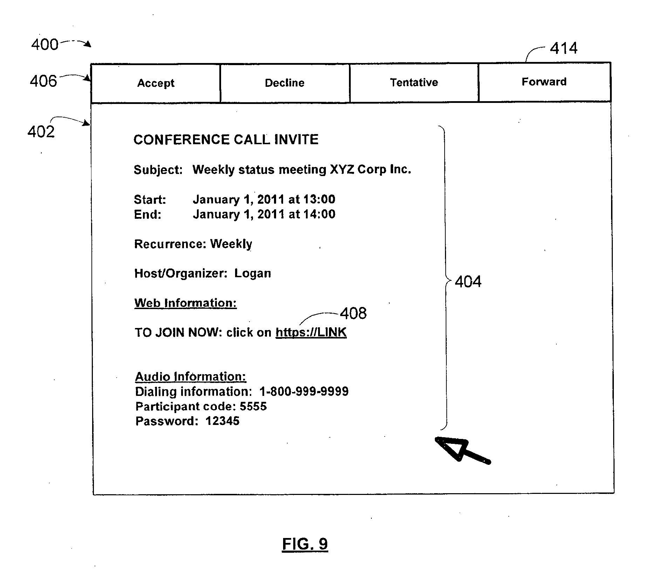

Thus, reference is now made to Figure 9, which shows a user interface 400 for displaying a received invitation message 402 on a non-host participant device 11, in accordance with an example embodiment. The device 11 first receives the invitation message 402 from the enterprise communications platform 14 with respect to a scheduled conference call. As shown, the message 402 as displayed can include a number of fields 404 which relate to conference call scheduling information. The fields 404 include Subject, Start time, End time, Recurrence, Host/Organizer, Web Information, and Audio Conference Information.

The invitation message 402 may be received as an e-mail message designating the participant's e-mail address, but can also be in other forms such as short message service (SMS), SIP message, instant messaging, or calendar invite. Note that, in other example embodiments, the message 402 may alternatively be received directly or indirectly from the host device 11a, rather than from the enterprise communications platform 14.

As shown on the interface 400, a number of response options 406 may be selected in order to respond to the invitation message 402. As shown, the response options 406 include Accept, Tentative, or Decline, as described above. Upon selection, the response is sent to the enterprise communications platform 14. In further example embodiments, selection of the Accept option may result in the details of the invitation message 402 being stored in a calendar application of the device 11. As shown, the response options 406 can also include an option to Forward 414 to a new participant client device. In some example embodiments, the Forward 414 function can be restricted depending on whether the new participant client device is permitted to join the conference call.

As shown in Figure 9, the invitation message 402 also includes Web Information which includes an option to select an address link 408 to activate a "Join Now" or "Meet Now" function. At the scheduled date and time of the conference call, the device 11 may receive a user input selecting the address link 408 to request joining the conference call session. In response, the device 11 sends a communication to the enterprise communications platform 14 containing a request for access to the conference call session. The enterprise communications platform 14 may then authenticate the device 11 by determining whether the device 11 is registered within the enterprise server 12, for example by verifying that the particular persistent device identifier is registered. Upon authentication, a conference call session can be established between the device 11 and the enterprise communications platform 14, which can include a media session 126 (Figure 6).

As can be appreciated, in some example embodiments the address link 408 identifies the enterprise communications platform 14 as well as the scheduled conference call session, and can include a Uniform Resource Locator (URL), a Uniform Resource Identifier (URI), or other suitable address.

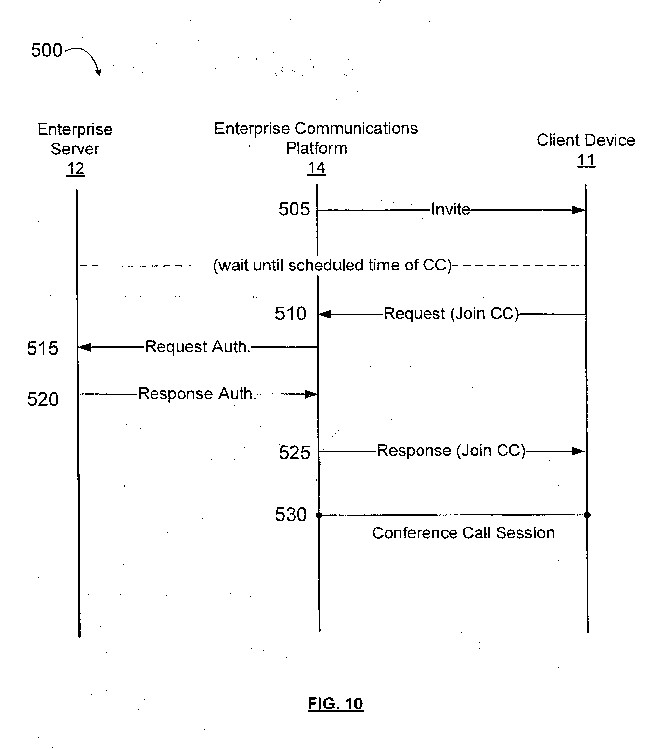

Specific implementations of authenticating a client device 11 in accordance with some example embodiments will now be described, referring now to Figure 10. Figure 10 shows an example conversation 500 between the enterprise communications platform 14, the enterprise server 12, and a client device 11.

In example embodiments, the enterprise communications platform 14 includes a memory for storing conference call scheduling information with respect to a scheduled conference call session. The enterprise communications platform 14 can also include a communications subsystem for communicating with the enterprise server 12. As mentioned above, the enterprise server 12 may contain a registry of client devices 11 and the associated phone numbers, e-mail address, persistent device identifiers and/or related user information such as user name and corporate title. Generally, client devices 11 which are identified in the registry are considered secure and can therefore be authenticated with respect to a conference call. Further, the persistent device identifiers and e-mail are known to be unique to the client devices 11 when registered with the enterprise server 12.

At step 505, the enterprise communications platform 14 sends an invitation message to the client device 11. The invitation message 402 can include conference call scheduling information, for example the fields 404 described above and as displayed in Figure 9.

At step 510, at the time of the scheduled conference call, the enterprise communications platform 14 receives a communication from the client device 11 with respect to the call. The communication can be triggered by selection of the address link 408 (Figure 9).

At step 515, the enterprise communications platform 14 determines whether the client device 11 is associated with the enterprise server 12, by sending a request for authentication to the enterprise server 12. In response, the enterprise server 12 verifies the authentication of the client device, for example by checking the registry. At step 520, the enterprise server 12 sends a response to the enterprise communications platform 14 on whether the client device 11 is to be authenticated.

At this stage (steps 515 and 520), the enterprise communications platform 14 can further authenticate the client device 11 by checking a "whitelist" as contained in the stored conference call scheduling information. The "whitelist" can contain a list of eligible participants and associated devices 11 to the conference call, as designated by the host device 11a. For example, the list can be in the form of e-mail addresses or participant individual names, which are correlated with the persistent device identifiers of the client device 11.

The enterprise communications platform 14 can now authenticate the client device 11 with respect to the scheduled conference call session. At step 525, the enterprise communications platform 14 sends a response to the client device 11 that it is authorized to join the conference call session. At step 530, if authentication is successful, the enterprise communications platform 14 establishes a conference call session with the device 11. This typically involves establishing media session legs with other participant devices 11 and connecting the media session legs together.

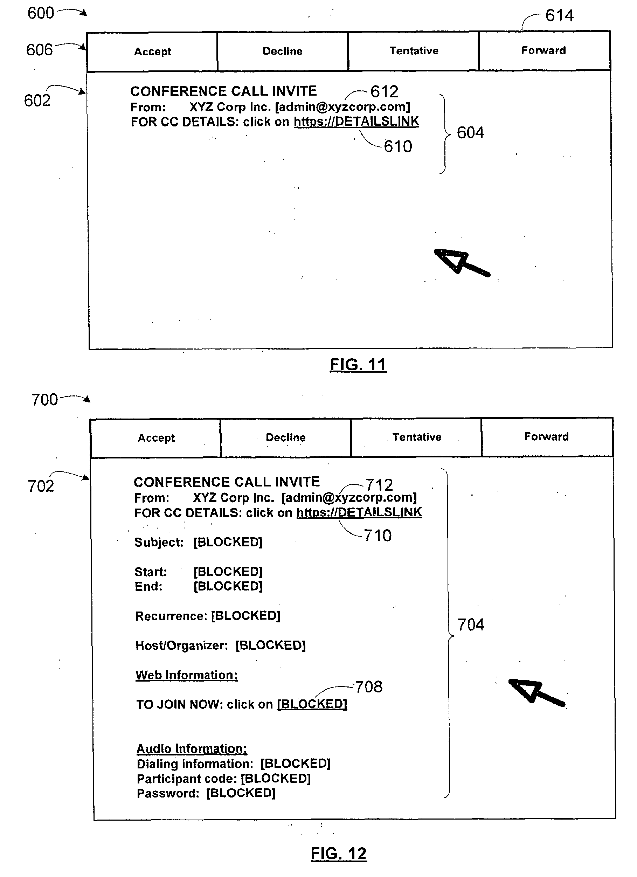

Reference is now made to Figure 11, which shows another user interface 600 for displaying a received invitation message 602 on the device 11, in accordance with another example embodiment. Generally, this embodiment can provide protection to any confidential information of the conference call. Generally, the client device 11 receives the invitation message 602 directly, or can receive the invitation message 602 as a forwarded message from another participant. Typically, in conventional systems there is little way to restrict the user from forwarding a scheduled calendar appointment to others, including any confidential conference call scheduling information as part of the calendar message body. In some example embodiments, in the received invitation message 602, the raw information in the message body is instead replaced with an URL link to the enterprise communications platform 14. The user can select the URL link, become authenticated by the enterprise communications platform 14, and receive the confidential conference call scheduling information such as subject, date, recurrence, web information (e.g. join-now links), or audio information (e.g. dial-in numbers, access codes).

Thus, referring still to Figure 11, the invitation message 602 may only include sender information 612 and an address link 610, while excluding the remaining conference call scheduling information. The interface 600 includes an option to select the address link 610, in order to obtain at least some of the remaining scheduling information. Upon selection of the address link 610 through the interface 600, the device 11 sends a communication to the enterprise communications platform 14. In response, if the device 11 is authenticated, the device 11 can receive at least some of any remaining conference call scheduling information. Such information can include information for connecting to the scheduled conference call session, for example web information or audio information, and may also include password information. Upon receiving the information, this results in the device 11 displaying an interface screen similar to interface 400, as shown in Figure 9.

As shown in Figure 11, the sender information 612 can identify the enterprise (e.g. XYZ Corp Inc.), so that the user can identify that the received address link 610 is not related to spam or viruses. Alternatively, the sender information 612 can identify the name of the host who is hosting the call. It can be appreciated that example embodiments could be used for providing extra security in securing conference calls between participant client devices 11 associated within the same enterprise network 20 (Figure 1).

The interface 600 can also include response options 606, including a Forward 614 response for forwarding the invitation message 602 to another participant device. If the present invitation message 602 is forwarded to another participant device, a similar interface 600 would be displayed on that device. Selection of the address link 610 from that device would result in requesting authentication from that participant device.

In some example embodiments, the enterprise communications platform 14 can further maintain a host-designated whitelist of authorized participants who may be granted access to the conference call scheduling information. If the invitation message is forwarded to someone not on the list they would not have access to the conference call scheduling information and could not participate in the call. The enterprise communications platform 14 may also store in the memory a log which stores and tracks those participant devices which have attempted to access the information, along with whether those devices were granted authorization.

Reference is now made to Figure 12, which shows an alternate user interface 700 for displaying a received invitation message 702 on the device 11, in accordance with another example embodiment. Generally, the user interface 700 shown in Figure 12 differs from the user interface 600 shown in Figure 11 by displaying only the headings of the subject fields 704 relating to the conference call scheduling information. For the remaining content of the fields, the interface 700 displays "[BLOCKED]", as shown, or some other suitable indicator such as blanks.

Upon selection of the address link 710 through the interface 700, the device 11 send a communication to the enterprise communications platform 14. In response, if the device 11 is authenticated, the device 11 can receive at least some of any remaining conference call scheduling information. Upon receiving the information, the device 10 can display the interface 700 with the content in the subject fields populated (e.g., similar to as shown in Figure 9). In particular, an address link 708 becomes available and displayed for selection by the user for implementing a join now function.

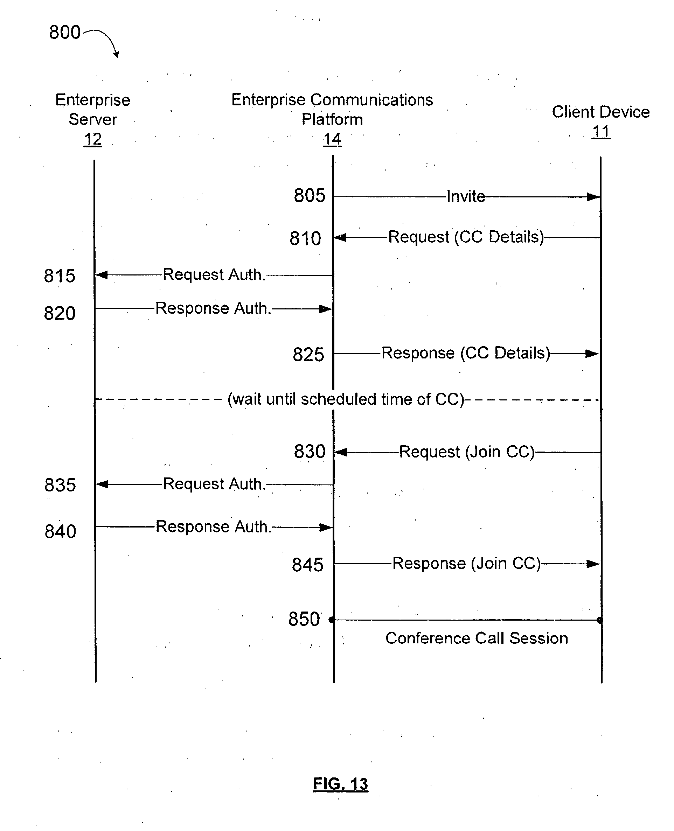

Specific implementations of authenticating a client device 11 having the interface of Figure 12 in accordance with some example embodiments will now be described, referring now to Figure 13. Figure 13 shows an example conversation 800 between the enterprise communications platform 14, the enterprise server 12, and a client device 11.

As shown in Figure 13, at step 805, the enterprise communications platform 14 sends an invitation message to the client device 11 in relation to a scheduled conference call. The invitation message 402 may contain only the sender information 712 and an address link 710. At step 810, the client device 11 sends a communication to the enterprise communications platform 14 in relation to the scheduled conference call, for requesting the remaining conference call scheduling information.

At step 815, the enterprise communications platform 14 determines whether the client device 11 is associated with the enterprise server 12, by sending a request for authentication to the enterprise server 12. In response, the enterprise server 12 verifies the authentication of the client device, for example by checking the registry. At step 820, the enterprise server 12 sends a response to the enterprise communications platform 14 on whether the client device 11 is to be authenticated.

At this stage (steps 815 and 820), enterprise communications platform 14 can further authenticate the client device 11 by checking a "whitelist" as contained in the stored conference call scheduling information. The "whitelist" can contain a list of eligible participants to the conference call. For example, the list can be in the form of e-mail addresses or participant individual names, which are correlated with the persistent device identifiers of the client device 11.

The enterprise communications platform 14 can now authenticate the client device 11 with respect to the scheduled conference call session. At step 825, the enterprise communications platform 14 sends a response to the client device 11 along with at least some of any remaining conference call scheduling information. This information can include information for connecting to the scheduled conference call session, for example Web Information or Audio Conference Information as shown in interface 700 (Figure 12). This information can also include Subject, Start time, End time, Recurrence, and/or Host/Organizer, if such information was not already contained in the original invitation message 402.

Referring still to Figure 13, at step 830, at the time of the scheduled conference call, the enterprise communications platform 14 receives a communication from the client device 11 with respect to the call. This can be triggered by selection of the address link 708. At step 835, the enterprise communications platform 14 determines whether the client device 11 is associated with the enterprise server 12, by sending a request for authentication to the enterprise server 12. In response, the enterprise server 12 verifies the authentication of the client device as being associated with the enterprise server 12, for example by checking the registry. At step 840, the enterprise server 12 sends a response to the enterprise communications platform 14 on whether the client device 11 is to be authenticated.

At step 845, the enterprise communications platform 14 sends a response to the client device 11 that it is authorized to join the conference call session. At step 850, if authentication is successful, the enterprise communications platform 14 establishes a conference call session with the device 11. This typically involves establishing media session legs with other participant devices 11 and connecting the media session legs together.

Referring still to the conversation 800 of Figure 13, note that, a similar process can be followed with respect to the interface 600 shown in Figure 11.

Variations of the above example methods may be used. While some of the above examples have been described as occurring in a particular order, it will be appreciated to persons skilled in the art that some of the messages or steps or processes may be performed in a different order provided that the result of the changed order of any given step will not prevent or impair the occurrence of subsequent steps. Furthermore, some of the messages or steps described above may be removed or combined in other embodiments, and some of the messages or steps described above may be separated into a number of sub-messages or substeps in other embodiments. Even further, some or all of the steps of the conversations may be repeated, as necessary. Elements described as methods or steps similarly apply to systems or subcomponents, and vice-versa.

In particular, it can be appreciated that while some example embodiments are directed to authentication at the enterprise level, such embodiments may further be supplemented with passcodes and/or host-designated whitelists which are stored and managed by the enterprise communications platform 14, as an extra layer of authentication.

Variations may be made to some example embodiments, which may include combinations and sub-combinations of any of the above. The various embodiments presented above are merely examples and are in no way meant to limit the scope of this disclosure. Variations of the innovations described herein will be apparent to persons of ordinary skill in the art having the benefit of the present disclosure, such variations being within the intended scope of the present disclosure. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present disclosure as a whole. The subject matter described herein intends to cover and embrace all suitable changes in technology.

## Claims

1. A method for authenticating client devices (11) from a conference call server (14), the conference call server including a memory for storing conference call scheduling information with respect to scheduled conference call sessions, wherein the conference call server (14) is in communication with an enterprise server (12), the method comprising:
receiving in the conference call server (14) a communication from a client device (11) with respect to a scheduled conference call session, the communication being issued in response to a selection of an address link (610) provided within a forwarded invitation message (602) which is associated with the scheduled conference call session;
determining whether the client device (11) is associated with the enterprise server (12), and if so authenticating the client device (11) with respect to the scheduled conference call session; and
sending from the conference call server (14) to the client device (11), after authenticating and in response to the communication, at least some of the conference call scheduling information including information for connecting to the scheduled conference call session.

2. The method as claimed in claim 1 further comprising, after the authenticating, establishing a media session between the conference call server (14) and the client device (11).

3. The method as claimed in claims 1 or 2 wherein the enterprise server (12) includes a registry of client devices, wherein the determining includes determining whether the client device (11) is registered with the enterprise server (12).

4. The method as claimed in any one of claims 1 to 3 wherein the conference call scheduling information further includes a list of eligible participants each identified by an address which correspond to eligible client devices for the scheduled conference call session.

5. The method as claimed in any one of claims 1 to 4 wherein the determining includes determining whether a persistent unique identifier of the client device (11) is associated with the enterprise server (12).

6. The method as claimed in any one of claims 1 to 5 wherein the communication is triggered from an option to select an address link selected from the client device (11).

7. The method as claimed in claim 1 wherein the at least some conference call scheduling information includes password information for access to the scheduled conference call session.

8. A conference call server (14) comprising:
a memory for storing conference call scheduling information with respect to a scheduled conference call session;
a communications subsystem for communicating with an enterprise server (12) and a client device (11); and
a controller configured for performing the method as claimed in any one of claims 1 to 7.

9. A non-transitory computer readable medium having recorded thereon statements and instructions for execution by one or more devices for authenticating client devices (11) for a conference call, said statements and instructions comprising code means for performing the method as claimed in any one of claims 1 to 7.

10. A method for securely handling conference call scheduling information with respect to a scheduled conference call session, the method comprising:
receiving, by a client device (11), an invitation message (602) with respect to the scheduled conference call session, the invitation message (602) including a first set of conference call scheduling information and a link for requesting a second set of conference call scheduling information;
sending, by the client device (11), a message to a server, the server being identified by the link for requesting the second set of conference call scheduling information, the message requesting the second set of conference call scheduling information;
if the client device (11) is authenticated, receiving, by the client device (11), the requested second set of conference call scheduling information;
displaying, by the client device (11), at least some of the requested second set of conference call scheduling information;
forwarding, by the client device (11), the invitation message (602), the invitation message (602) including the first set of conference call scheduling information and the link for requesting the second set of conference call scheduling information.

11. Method of claim 10, wherein the second set of conference call scheduling information includes information for connecting to the scheduled conference call session.

## Patentansprüche

1. Ein Verfahren zum Authentifizieren von Client-Vorrichtungen (11) von einem Konferenzgesprächs-Server (14), wobei der Konferenzgesprächs-Server einen Speicher umfasst zum Speichern von Konferenzgesprächs-Planungsinformation in Bezug auf geplante Konferenzgesprächssitzungen, wobei der Konferenzgesprächs-Server (14) in Verbindung mit einem Unternehmensserver (12) ist, wobei das Verfahren aufweist:
Empfangen, in dem Konferenzgesprächs-Server (14), einer Kommunikation von einer Client-Vorrichtung (11) in Bezug auf eine geplante Konferenzgesprächssitzung, wobei die Kommunikation ausgegeben wird in Reaktion auf eine Auswahl eines Adresse-Links (610), der in einer weitergeleiteten Einladungsnachricht (602) vorgesehen ist, die mit der geplanten Konferenzgesprächssitzung assoziiert ist;
Bestimmen, ob die Client-Vorrichtung (11) mit dem Unternehmensserver (12) assoziiert ist, und wenn dem so ist, Authentifizieren der Client-Vorrichtung (11) in Bezug auf die geplante Konferenzgesprächssitzung; und
Senden, von dem Konferenzgesprächs-Server (14) an die Client-Vorrichtung (11), nach dem Authentifizieren und in Reaktion auf die Kommunikation, zumindest eines Teils der Konferenzgesprächs-Planungsinformation, einschließlich Information zum Verbinden mit der geplanten Konferenzgesprächssitzung.

2. Das Verfahren gemäß Anspruch 1, das weiter aufweist, nach dem Authentifizieren, ein Herstellen einer Media-Sitzung zwischen dem Konferenzgesprächs-Server (14) und der Client-Vorrichtung (11).

3. Das Verfahren gemäß den Ansprüchen 1 oder 2, wobei der Unternehmensserver (12) eine Registry von Client-Vorrichtungen umfasst, wobei das Bestimmen ein Bestimmen umfasst, ob die Client-Vorrichtung (11) mit dem Unternehmensserver (12) registriert ist.

4. Das Verfahren gemäß einem der Ansprüche 1 bis 3, wobei die Konferenzgesprächs-Planungsinformation weiter eine Liste von berechtigten Teilnehmern umfasst, die jeweils durch eine Adresse identifiziert sind, die berechtigten Client-Vorrichtungen für die geplante Konferenzgesprächssitzung entsprechen.

5. Das Verfahren gemäß einem der Ansprüche 1 bis 4, wobei das Bestimmen ein Bestimmen umfasst, ob ein persistenter eindeutiger Identifizierer der Client-Vorrichtung (11) mit dem Unternehmensserver (12) assoziiert ist.

6. Das Verfahren gemäß einem der Ansprüche 1 bis 5, wobei die Kommunikation von einer Option zum Auswählen eines Adresse-Links ausgelöst wird, die von der Client-Vorrichtung (11) ausgewählt wird.

7. Das Verfahren gemäß Anspruch 1, wobei der zumindest Teil der Konferenzgesprächs-Planungsinformation eine Passwortinformation für einen Zugang zu der geplanten Konferenzgesprächssitzung umfasst.

8. Ein Konferenzgesprächs-Server (14), der aufweist:
einen Speicher zum Speichern von Konferenzgesprächs-Planungsinformation in Bezug auf eine geplante Konferenzgesprächssitzung;
ein Kommunikationsteilsystem zum Kommunizieren mit einem Unternehmensserver (12) und einer Client-Vorrichtung (11); und
eine Steuervorrichtung, die konfiguriert ist zum Durchführen des Verfahrens gemäß einem der Ansprüche 1 bis 7.

9. Ein nicht-transitorisches computerlesbares Medium mit darauf gespeicherten Angaben und Ausführungen zur Ausführung durch eine oder mehrere Vorrichtung(en) zum Authentifizieren von Client-Vorrichtungen (11) für ein Konferenzgespräch, wobei die Angaben und Ausführungen Codemittel aufweisen zum Durchführen des Verfahrens gemäß einem der Ansprüche 1 bis 7.

10. Ein Verfahren zur sicheren Handhabung von Konferenzgesprächs-Planungsinformation in Bezug auf eine geplante Konferenzgesprächssitzung, wobei das Verfahren aufweist:
Empfangen, durch eine Client-Vorrichtung (11), einer Einladungsnachricht (602) in Bezug auf die geplante Konferenzgesprächssitzung, wobei die Einladungsnachricht (602) einen ersten Satz von Konferenzgesprächs-Planungsinformation und einen Link zum Anfordern eines zweiten Satzes von Konferenzgesprächs-Planungsinformation umfasst;
Senden, durch die Client-Vorrichtung (11), einer Nachricht an einen Server,
wobei der Server durch den Link zum Anfordern des zweiten Satzes von Konferenzgesprächs-Planungsinformation identifiziert wird, wobei die Nachricht den zweiten Satz von Konferenzgesprächs-Planungsinformation anfordert;
wenn die Client-Vorrichtung (11) authentifiziert ist, Empfangen, durch die Client-Vorrichtung (11), des angeforderten zweiten Satzes von Konferenzgesprächs-Planungsinformation;
Anzeigen, durch die Client-Vorrichtung (11), zumindest eines Teils des angeforderten zweiten Satzes von Konferenzgesprächs-Planungsinformation;
Weiterleiten, durch die Client-Vorrichtung (11), der Einladungsnachricht (602), wobei die Einladungsnachricht (602) den ersten Satz von Konferenzgesprächs-Planungsinformation und den Link zum Anfordern des zweiten Satzes von Konferenzgesprächs-Planungsinformation umfasst.

11. Das Verfahren gemäß Anspruch 10, wobei der zweite Satz von Konferenzgesprächs-Planungsinformation Information zum Verbinden mit der geplanten Konferenzgesprächssitzung umfasst.

## Revendications

1. Procédé d'authentification de dispositifs clientes (11) à partir d'un serveur de téléconférence (14), le serveur de téléconférence comprenant une mémoire destinée à stocker des informations d'ordonnancement de téléconférences qui intéressent des sessions de téléconférence planifiées, dans lequel le serveur de téléconférence (14) est en communication avec un serveur d'entreprise (12), le procédé comprenant les étapes consistant à :
recevoir, sur le serveur de téléconférence (14), une communication provenant d'un dispositif client (11) à propos d'une session de téléconférence planifiée, la communication étant établie en réponse à la sélection d'un lien d'adresse (610) fourni avec un message d'invitation acheminé (602) qui est associé à la session de téléconférence planifiée ;
déterminer si le dispositif client (11) est associé au serveur d'entreprise (12) et, si tel est le cas, authentifier le dispositif client (11) pour la session de téléconférence planifiée ; et
envoyer entre le serveur de téléconférence (14) et le dispositif client (11), après l'authentification et en réponse à la communication, au moins certaines informations d'ordonnancement de téléconférences qui comprennent des informations pour se connecter à la session de téléconférence planifiée.

2. Procédé selon la revendication 1, comprenant en outre, après l'étape d'authentification, l'étape consistant à établir une session multimédia entre le serveur de téléconférence (14) et le dispositif client (11).

3. Procédé selon la revendication 1 ou 2, dans lequel le serveur d'entreprise (12) comprend un registre de dispositifs clients, dans lequel l'étape de détermination comprend l'étape consistant à déterminer si le dispositif client (11) est enregistré auprès du serveur d'entreprise (12).

4. Procédé selon l'une quelconque des revendications 1 à 3, dans lequel les informations d'ordonnancement de téléconférences comprennent en outre une liste de participants admissibles, chacun étant identifié par une adresse qui correspond à des dispositifs clients admissibles pour la session de téléconférence planifiée.

5. Procédé selon l'une quelconque des revendications 1 à 4, dans lequel l'étape de détermination comprend l'étape consistant à déterminer si un identificateur persistant unique du dispositif client (11) est associé au serveur d'entreprise (12).

6. Procédé selon l'une quelconque des revendications 1 à 5, dans lequel la communication est déclenchée à partir d'une option de sélection d'un lien d'adresse qui est sélectionné à partir du dispositif client (11).

7. Procédé selon la revendication 1, dans lequel lesdites au moins certaines informations d'ordonnancement de téléconférences comprennent des informations de mot de passe afin d'accéder à la session de téléconférence planifiée.

8. Serveur de téléconférence (14) comprenant :
une mémoire destinée à stocker des informations d'ordonnancement de téléconférences qui intéressent des sessions de téléconférence planifiées ;
un sous-système de communication destiné à communiquer avec un serveur d'entreprise (12) et avec un dispositif client (11) ; et
un contrôleur configuré pour exécuter le procédé selon l'une quelconque des revendications 1 à 7.

9. Support non volatil lisible par ordinateur, qui porte enregistrées des déclarations et des instructions destinées à être exécutées par un ou plusieurs dispositifs afin d'authentifier des dispositifs clients (11) pour une téléconférence, lesdites déclarations et instructions comprenant des moyens de code pour exécuter le procédé selon l'une quelconque des revendications 1 à 7.

10. Procédé de 'gestion sécurisée d'informations d'ordonnancement de téléconférences intéressant une session de téléconférence planifiée, le procédé comprenant les étapes consistant à :
recevoir, par un dispositif client (11), un message d'invitation (602) intéressant une session de téléconférence planifiée, le message d'invitation (602) comprenant un premier ensemble d'informations d'ordonnancement de téléconférences et un lien pour demander un second ensemble d'informations d'ordonnancement de téléconférences ;
envoyer un message au serveur par le dispositif client (11), le serveur étant identifié par le lien destiné à demander le second ensemble d'informations d'ordonnancement de téléconférences, le message demandant le second ensemble d'informations d'ordonnancement de téléconférences ;
si le dispositif client (11) est authentifié, recevoir, par le dispositif client (11), le second ensemble d'informations d'ordonnancement de téléconférences qui a été demandé ;
afficher par le dispositif client (11) au moins une partie du second ensemble d'informations d'ordonnancement de téléconférences qui a été demandé ;
acheminer le message d'invitation (602) par le dispositif client (11), le message d'invitation (602) incluant le premier ensemble d'informations d'ordonnancement de téléconférences et le lien pour demander un second ensemble d'informations d'ordonnancement de téléconférences.

11. Procédé selon la revendication 10, dans lequel le second ensemble d'informations d'ordonnancement de téléconférences comprend des informations pour se connecter à la session de téléconférence planifiée.
